# EUROPEAN PATENT SPECIFICATION

(11) **EP 0 634 316 B1**
(45) Date of publication and mention of the grant of the patent: **23.07.1997**
(21) Application number: 94304619.3
(22) Date of filing: 24.06.1994
(51) Int. Cl.: B62D 25/10

(54) **A hood top assembly for a motor vehicle**
Motorhaube für Kraftfahrzeuge
Capot de véhicule

(30) Priority: 17.07.1993 GB 9314873
(43) Date of publication of application: 18.01.1995
(73) Proprietor: FORD MOTOR COMPANY LIMITED, Brentwood Essex (GB); Ford-Werke Aktiengesellschaft, 50735 Köln (DE); FORD FRANCE S. A., 92506 Rueil-Malmaison Cédex (FR)
(72) Inventor: Davies, David Huw, Chelmsford, Essex (GB); Fullbrook, Ian James, Billericay, Essex CM11 1ES (GB)
(74) Representative: Messulam, Alec Moses

(56) References cited:
- DE-A- 2 441 659
- DE-C- 3 738 505
- DE-U- 9 111 432
- GB-A- 2 268 130
- US-A- 5 205 597

## Description

This invention relates to a hood top assembly for a motor vehicle. The hood top covers the front part of the vehicle and usually closes the engine compartment. The hood top is sometimes referred to as the bonnet but the term 'hood top' will be used in this specification.

The styling of the front of a new vehicle is very important as this part of the vehicle has a great visual impact. As a result, vehicle stylists demand considerable freedom to express their ideas in this part of the vehicle. The hood top assembly is inevitably an important, if not the most important, part of the front end appearance.

However engineering considerations also have to be met to ensure that the hood top assembly has sufficient strength to be stable, particularly when the hood top is being opened. This requires that the sheet metal at the front edge of the assembly has the necessary structural reinforcement. This reinforcement is normally formed by a metal structure at the forwardmost extremity of the assembly.

DE-C-3 738 505 discloses a hood top assembly for a motor vehicle, the assembly comprising a metal outer skin panel, metal inner skin panels secured to the outer skin panel and a plastics grille that forms the forward most extremity of the assembly. The grille is secured to the inner skin panels.

According to the present invention there is provided a hood top assembly for a motor vehicle, the assembly comprising a metal outer skin panel, a metal inner skin panel secured to the outer skin panel and a plastics grille, the grille being secured to a flange at the front edge of the inner and outer skin panels so that the grille forms the forward most extremity of the assembly and the flange being formed by overlapping peripheral edges of the inner and outer panels, which peripheral edges are welded to one another prior to the grille being secured to the flange.

Preferably the flange includes landing points for the grille, the landing points being formed by surfaces lying at right angles to the vehicle centreline, when the hood top assembly is mounted on a vehicle.

The inner and outer skin panels are preferably joined to one another by a clinch flange surrounding the whole of the periphery of the assembly, apart from the area where the grille will be connected to the inner and outer panels.

The overlapping peripheral edges of the inner and outer panels are preferably spot-welded together.

The grille preferably has moulded-in threaded studs which pass through holes in the flange and accept fastening nuts to secure the grille to the flange, together with location spigots which engage in location holes on the flange to ensure accurate positioning of the grille.

The front lower edge of the hood assembly is formed by the grille. The grille can be made of moulded plastics, and there will be no metal skin panel around the lower edge of the grille. The grille itself however may include reinforcement webs which brace the lower edge of the grille against a feature on the inner panel.

It is also advantageous if the hood top latch release mechanism is mounted, at least in part, on the grille. This mechanism can be operated by a pivoting handle which is pivoted between the reinforcement webs of the grille.

In order to resist denting of the outer skin panel when the hood top assembly is closed, the inner skin panel preferably has a reinforcement section which contacts, from the inside, the outer skin panel in the area where force would be applied to close the hood top.

The invention will now be further described, by way of example, with reference to the accompanying drawings, in which:
Figure 1 is a perspective, exploded view from above of a hood top assembly in accordance with the invention;
Figure 2 is a view from below of the assembly of Figure 1;
Figure 3 is a section through the hood top on the line III-III from Figure 2;
Figure 4 is a front view of the hood top assembly;
Figure 5 is a view of the hood top assembly taken beneath the hood top and looking forward;
Figure 6 is a section through the assembly of Figure 5, on the line VI-VI;
Figure 7 is a section through the assembly of Figure 5 on the line VII-VII;
Figure 8 is a perspective view showing the rear face of the grille and the hood top latch release mechanism;
Figure 9 is a section through the assembly of Figure 5 on the line IX-IX; and
Figure 10 is a further section through the assembly of Figure 5, showing the grill reinforcement webs.

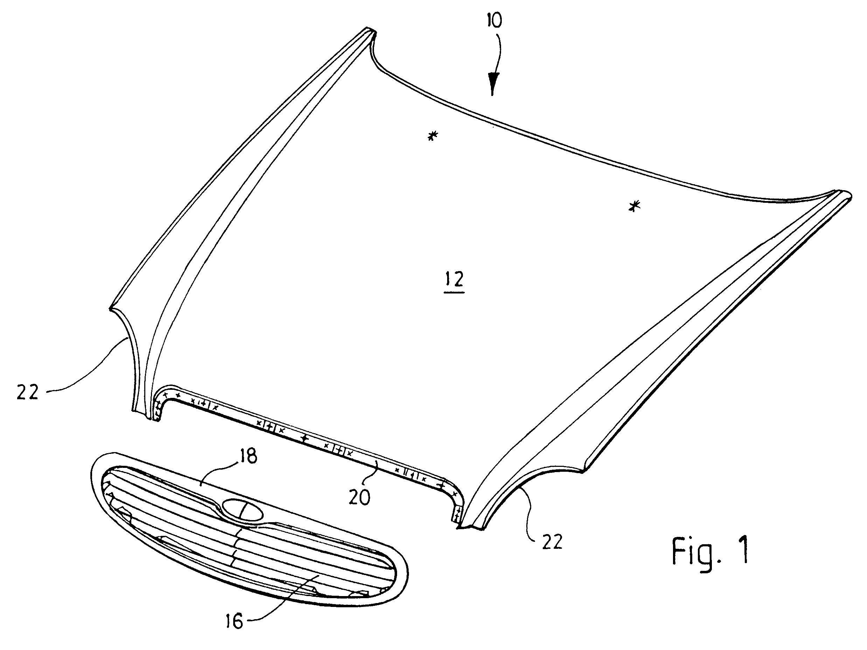

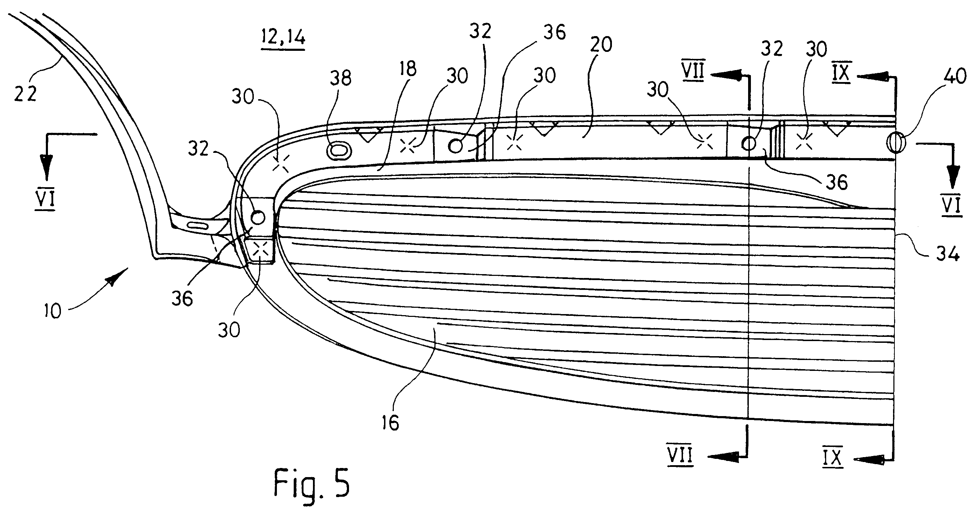

The hood top assembly 10 shown in Figure 1 comprises an outer panel 12, and inner panel 14 (which cannot be seen in Figure 1 but can be seen in the remaining Figures), and a grille 16. The grill 16 has an upper edge 18 which will be secured to a flange 20. The inner panel (which is a reinforcement panel and is not visible when the hood top is closed) is joined to the outer panel 12 around the entire periphery of the outer panel, by a clinch flange. Only in the region of the grill flange 20 are the two panels joined by spot-welding. It will be seen from Figure 1 and from Figure 4 that the front edge of the hood top assembly if formed in the centre by the grille 16, which itself forms the lower front edge of the grille. At either side the hood top assembly has cut-outs 22 for accommodating headlamps.

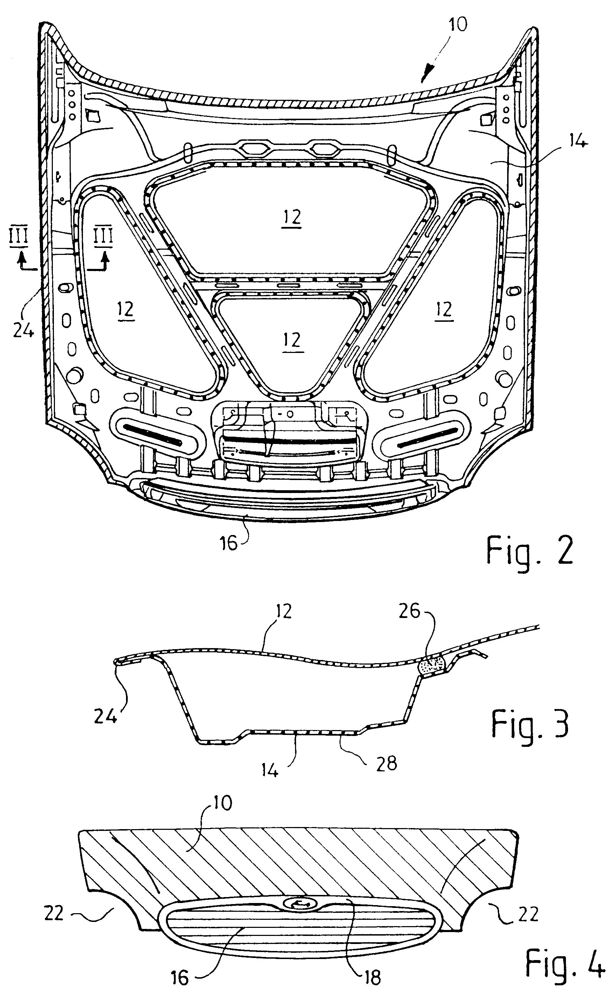

Figure 2 shows the inner panel 14 which is relatively complex in shape to provide the necessary structural support and various other functions to the hood top. The inner panel is continuous around the periphery of the assembly but is interrupted across the middle, where the underside of the inner panel 12 is exposed in the areas indicated. The clinched flange between the inner and outer panels 14, 12 is indicated at 24, and is shown in cross-section in Figure 3. Figure 3 also shows a typical box section formed by the inner and outer panels which together give strength to the assembly. An adhesive/sealing bead 26 is also provided between the two panels. A flat area 28 on the inner panel is provided to act as a reference point for positioning the inner panel during assembly.

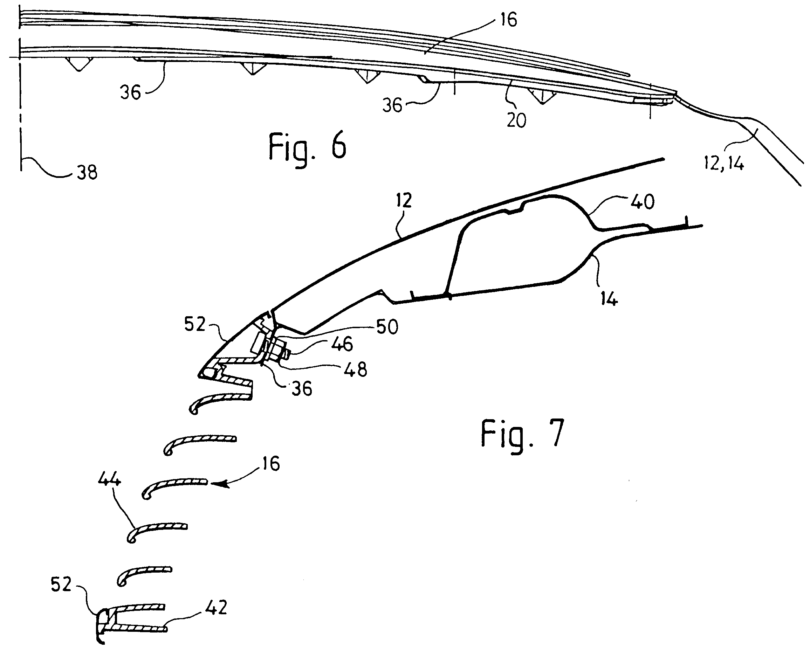

Figure 5 shows detail of the connection between the grill 16 and the inner and outer panel assembly 12, 14. In Figure 5 the flange 20 is shown, with the spot-welds which join the panels 12, 14 indicated at 30. The flange 20 has fastening holes 32 (three on either side of the centreline 34) the fastening holes 32 are located within landing surfaces 36 which, as can be seen in Figure 6, are set to be at right angles to the car centreline (which itself is indicated at 38 in Figure 6). The flange 20 also has apertures 38 and 40 which provide location for the grille when it is offered up to the inner/outer panel assembly 12, 14. The apertures 38 provide vertical location and the aperture 40 provides horizontal location, when a tapered spigot formed on the grille 16 enters the holes on assembly.

The landing areas 36 are formed at right angles to the car centreline so that the grille can be assembled to the inner/outer panel assembly 12, 14 by movement in the direction of the car centreline.

The section through the front edge of the hood top as shown in Figure 7 shows the relative positions of the inner and outer panels 12, 14 in this area. The inner panel 14 has attached to it a latch/striker plate reinforcement panel 40 which extends up from the inner panel into contact with the inner surface of the outer panel 12, to support the outer panel when pressure is applied downwards on the outside of the panel, to resist denting of the panel when the hood top is being closed.

The grille 16 has a peripheral integrally moulded frame 42, and the centre area of the grille is provided by a number of louvre slats 44. A threaded bolt or stud 46 is mounted in the peripheral frame 42, at the top of the grille and passes through one of the holes 32 before having a nut 48 and a washer 50 placed over the stud to secure the grille to the sheet metal of the outer 12 and inner 14 skin panels. A peripheral trim panel 52 is also a part of the grille 16.

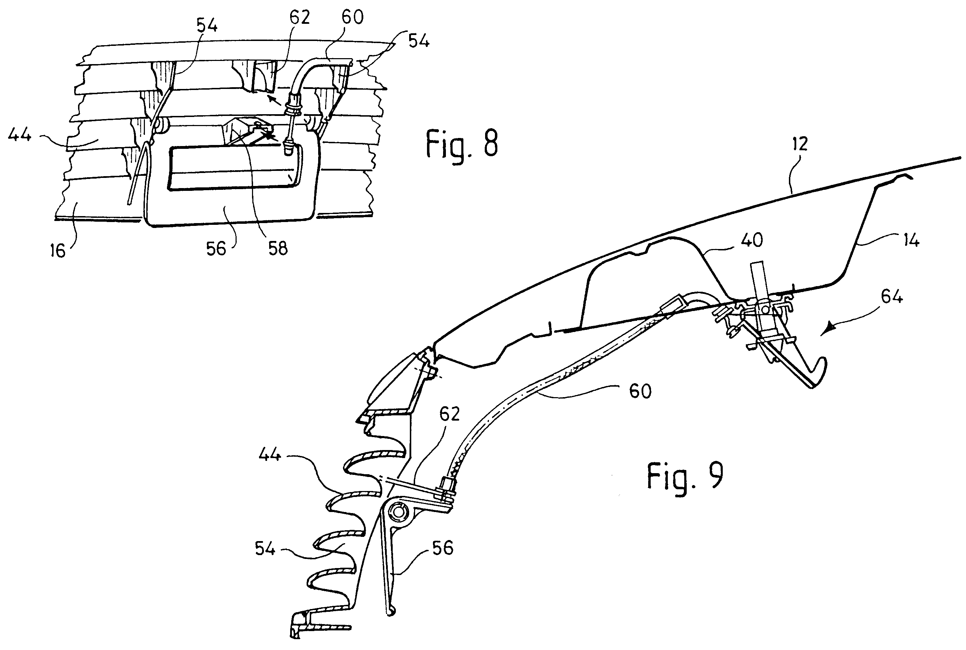

Figure 8 shows the rear of the grille 16, with reinforcing webs 54 connecting the louvre slats 44. A hood top release handle 56 is pivotally mounted between the webs 54. The handle 56 has a feature 58 for retaining the end of the inner wire of a Bowden cable 60, the sheath of the cable being held in a bracket 62 which is integrally moulded with the grill 16.

Figure 9 shows the components of Figure 8, in cross-section and with the Bowden cable 60 connected to a hood top release latch mechanism 64. In use, the user will place a hand beneath the bottom of the grille 16 to grasp the handle 56 and to pull the handle towards the grille. This will cause the inner wire of the cable 60 to be pulled and to release the latch 64 so that the bonnet can be fully opened. It should be noted that the user does not have to move his hand between releasing the latch and lifting the bonnet; this can all be done in one operation because of the position of the release handle 56.

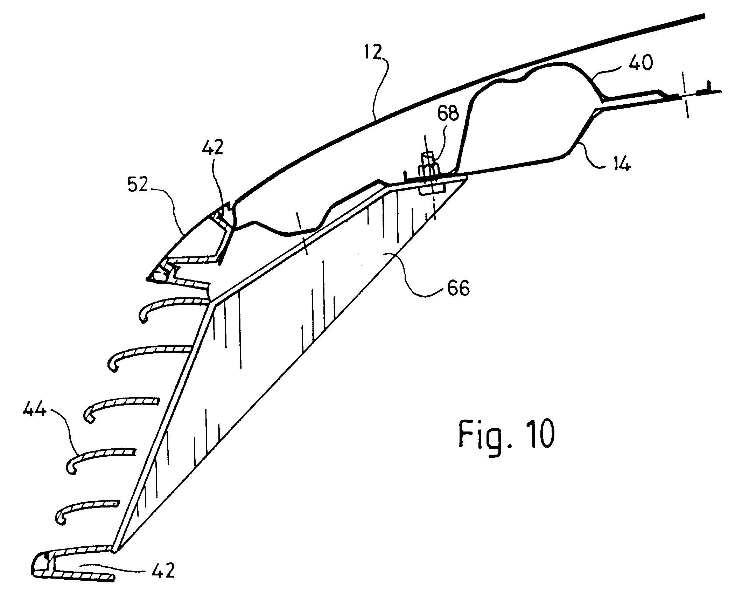

In order to support the lower edge of the grille 16, the back of the grille may also be provided with integrally moulded reinforcement webs 66 as shown in Figure 10. The webs 66 extends from the lower edge 42 of the grille frame to a fixing point where it is secured through the inner panel 14 to the inner panel reinforcement 40 by means of a nut and bolt arrangement indicated at 68. Of course any other suitable fastening arrangement could be used at this point.

The hood top described, with the radiator grille forming an integral structural part of the hood top allows considerable design freedom on a part of the vehicle which is the subject of considerable design input. By using this part of the hood top to support the latch release mechanism, the latch release mechanism becomes readily accessible and easy to operate.

## Claims

1. A hood top assembly (10) for a motor vehicle, the assembly comprising a metal outer skin panel (12), a metal inner skin panel (14) secured to the outer skin panel and a plastics grille (16) that forms the forward most extremity of the assembly (10), characterised in that the grille (16) is secured to a flange (20) at the front edge of the inner and outer skin panels, the flange being formed by overlapping peripheral edges of the inner and outer panels, which peripheral edges are welded to one another prior to the grille (16) being secured to the flange (20).

2. A hood top assembly as claimed in Claim 1, characterised in that the flange (20) includes landing points (36) for the grille (16), the landing points being formed by surfaces which will lie at right angles to the vehicle centreline when the hood top assembly (10) is mounted on a vehicle.

3. A hood top assembly as claimed in Claim 1 or Claim 2, characterised in that the inner and outer skin panels (12, 14) are joined to one another by a clinch flange surrounding the whole of the periphery of the assembly (10), apart from the area where the grille (16) will be secured to the flange (20) formed by the inner and outer panels.

4. A hood top assembly as claimed in any preceding claim, characterised in that the overlapping peripheral edges of the inner and outer panels (12, 14) are spot-welded together.

5. A hood top assembly as claimed in any preceding claim, characterised in that the grille (16) has moulded-in threaded studs (46) which pass through holes (32) in the flange (20) and accept fastening nuts (48) to secure the grille to the flange, together with location spigots which engage in location holes on the flange to ensure accurate positioning of the grille relative to the flange.

6. A hood top assembly as claimed in any preceding claim, characterised in that the front lower edge of the hood assembly (10) is formed by the grille (16).

7. A hood top assembly as claimed in any preceding claim, characterised in that the grille (16) includes reinforcement webs (66) which brace the lower edge of the grille against the inner panel (14).

8. A hood top assembly as claimed in any preceding claim, characterised in that the hood top latch release mechanism (56, 64) is mounted, at least in part, on the grille (16).

9. A hood top assembly as claimed in Claim 8 when dependent on Claim 7, characterised in that the hood top latch release mechanism (56, 64) can be operated by a pivoting handle (56) which is pivoted between the reinforcement webs (66) of the grille.

10. A hood top assembly as claimed in any preceding claim, characterised in that the inner skin panel (14) has a reinforcement section (40) which contacts, from the inside, the outer skin panel (12) in the area where force would be applied to close the hood top.

## Patentansprüche

1. Eine Konstruktion (10) einer Motorhaube für ein Kraftfahrzeug, wobei die Konstruktion ein äußeres Hüllblech (12), ein inneres Hüllblech (14), das am äußeren Hüllblech befestigt ist, und einen Kühlergrill aus Kunststoff (16) umfaßt, der das vorderste Ende der Konstruktion (10) bildet, dadurch gekennzeichnet, daß der Kühlergrill (16) an einem Flansch (20) an der Vorderkante des inneren und des äußeren Hüllblechs befestigt ist, wobei der Flansch von den überlappenden, umlaufenden Kanten des inneren und des äußeren Blechs gebildet wird, und wobei diese umlaufenden Kanten miteinander verschweißt werden, bevor der Kühlergrill (16) an dem Flansch (20) befestigt wird.

2. Eine Konstruktion einer Motorhaube nach Anspruch 1, dadurch gekennzeichnet, daß der Flansch (20) Angriffspunkte (36) für den Kühlergrill (16) umfaßt, wobei die Angriffspunkte durch Oberflächen gebildet werden, die in rechtem Winkel zur Mittellinie des Fahrzeugs liegen, wenn die Konstruktion der Motorhaube (10) an ein Fahrzeug montiert wird.

3. Eine Konstruktion einer Motorhaube nach Anspruch 1 oder 2, dadurch gekennzeichnet, daß die inneren und äußeren Hüllbleche (12, 14) miteinander durch einen Wulstflansch verbunden sind, der um den gesamten Umfang der Konstruktion (10) herum verläuft, außer an der Fläche, wo der Kühlergrill (16) an dem durch das innere und das äußere Blech gebildeten Flansch (20) befestigt wird.

4. Eine Konstruktion einer Motorhaube nach irgendeinem der vorstehenden Ansprüche, dadurch gekennzeichnet, daß die übertappenden, umlaufenden Kanten von innerem und äußerem Blech (12, 14) durch Punktschweißen miteinander verbunden werden.

5. Eine Konstruktion einer Motorhaube nach irgendeinem der vorstehenden Ansprüche, dadurch gekennzeichnet, daß der Kühlergrill (16) daraus geformte Gewindestollen (46) besitzt, die durch Löcher (32) im Flansch (20) ragen und Befestigungsmuttern (48) aufnehmen, um den Kühlergrill mit dem Flansch zu verbinden, zusammen mit Positionierungszapfen, die in Positionierungslöcher am Flansch eingreifen, um eine genaue Positionierung des Kühlergrills bezüglich des Flansches zu gewährleisten.

6. Eine Konstruktion einer Motorhaube nach irgendeinem der vorstehenden Ansprüche, dadurch gekennzeichnet, daß die vordere untere Kante der Konstruktion der Motorhaube (10) durch den Kühlergrill (16) gebildet wird.

7. Eine Konstruktion einer Motorhaube nach irgendeinem der vorstehenden Ansprüche, dadurch gekennzeichnet, daß der Kühlergrill (16) Verstärkungsrippen (66) umfaßt, die die Unterkante des Kühlergrills gegen das innere Blech (14) abstützen.

8. Eine Konstruktion einer Motorhaube nach irgendeinem der vorstehenden Ansprüche, dadurch gekennzeichnet, daß der Entriegelungsmechanismus (56, 64) der Motorhaube wenigstens teilweise am Kühlergrill (16) montiert ist.

9. Eine Konstruktion einer Motorhaube nach Anspruch 8, wenn Abhängigkeit von Anspruch 7 besteht, dadurch gekennzeichnet, daß der Entriegelungsmechanismus (56, 64) der Motorhaube durch einen drehbaren Griff (56) betätigt werden kann, der zwischen den Verstärkungsrippen (66) des Kühlergrills drehbar aufgehängt ist.

10. Eine Konstruktion einer Motorhaube nach irgendeinem der vorstehenden Ansprüche, dadurch gekennzeichnet, daß das innere Hüllblech (14) einen verstärkten Bereich (40) besitzt, der von innen an derjenigen Fläche einen Kontakt mit dem äußeren Hüllblech (12) herstellt, an der zum Schließen der Motorhaube eine Kraft ausgeübt wird.

## Revendications

1. Unité de capot (10) dur un véhicule à moteur, l'unité comprenant un panneau de carrosserie externe (12) métallique, un panneau de carrosserie interne (14) métallique fixé au panneau de carrosserie externe métallique et une grille (16) en matière plastique qui forme l'extrémité antérieure de l'unité (10), caractérisée en ce que la grille (16) est fixée à une bride (20) au niveau de l'arête avant des panneaux de carrosserie externe et interne, la bride étant formée par les arêtes périphériques se chevauchant des panneaux de carrosserie externe et interne, lesdites arêtes périphériques étant soudées l'une à l'autre avant que la grille (16) ne soit fixée à la bride (20).

2. Unité de capot selon la revendication 1, caractérisée en ce que la bride (20) inclut des points de fixation (36) dur la grille (16) les points de fixation étant formés par des surfaces qui se trouvent à angle droit par rapport à la ligne centrale du véhicule lorsque l'unité de capot (10) est montée sur un véhicule.

3. Unité de capot selon la revendication 1 ou 2, caractérisée en ce que les panneaux de carrosserie interne et externe (12, 14) sont joints l'un à l'autre par une bride rivée entourant la totalité de la périphérie de l'unité (10), sauf la zone où la grille (16) est fixée à la bride (20) formée par les panneaux interne et externe.

4. Unité de capot selon l'une des revendications précédentes, caractérisée en ce que les arêtes périphériques se chevauchant des panneaux interne et externe (12, 14) sont soudés ensemble par points.

5. Unité de capot selon l'une des revendications précédentes, caracterisée en ce que la grille (16) présente des goujons filetés (46) moulés intégralement qui passent à travers les trous (32) dans la bride (20) et reçoivent des écrous de fixation (48) destinés à fixer la grille à la bride, ainsi que des ergots de positionnement qui s'engagent dans des trous de positionnement sur la bride pour garantir le positionnement précis de la grille par rapport à la bride.

6. Unité de capot selon l'une des revendications précédentes, caractérisée en ce que l'arête inférieure avant de l'unité de capot (10) est formée par la grille (16).

7. Unité de capot selon l'une des revendications précédentes, caractérisée en ce que la grille (16) inclut des nervures de renforcement (66) qui étançonnent l'arête inférieure de la grille contre le panneau interne (14).

8. Unité de capot selon l'une des revendications précédentes, caractérisée en ce que le mécanisme de déverrouillage du verrou du capot (56, 64) est monté, au moins en partie, sur la grille (16).

9. Unité de capot selon la revendication 8, caractérisée en ce que le mécanisme de déverrouillage du verrou du capot (56, 64) peut être actionné par une poignée pivotante (56) qui est montée entre les nervures de renforcement (66) de la grille avec faculté de pivotement.

10. Unité de capot selon l'une des revendications précédentes, caractérisée en ce que le panneau de carrosserie interne (14) présente une section de renforcement (40) qui est en contact, depuis l'intérieur, avec le panneau de carrosserie externe (12) dans la zone où une force serait appliquée pour fermer le capot.
